# EUROPÄISCHE PATENTANMELDUNG

(11) **EP 1 457 286 A2**
(43) Veröffentlichungstag der Anmeldung: **15.09.2004**
(21) Anmeldenummer: 04005779.6
(22) Anmeldetag: 11.03.2004
(51) Int. Cl.: B23K 26/42

(54) **Verfahren, Überwachungsvorrichtung und deren Anwendung und Laserbearbeitungsanlage mit Fehlstellenüberwachung einer optischen Komponente**

(30) Priorität: 11.03.2003 DE 10310854
(71) Anmelder: Erlas Erlanger Lasertechnik GmbH, 91056 Erlangen (DE)
(72) Erfinder: Förtschbeck, Ewald, 91080 Uttenreuth (DE)
(74) Vertreter: LOUIS- PÖHLAU- LOHRENTZ

(57) **Zusammenfassung**

Verfahren, Überwachungsvorrichtung und deren Anwendung und Laserbearbeitungsanlage mit Fehlstellenüberwachung einer optischen Komponente. Die Überwachung einer optischen Komponente in einer Lasermaterialbearbeitungsanlage wird durchgeführt, um eine Veränderung des Laserstrahls und daraus folgend eine Änderung der Fertigungsqualität des bearbeiteten Werkstücks frühzeitig zu erkennen. Zur Überwachung einer in einem Laserbearbeitungskopf angeordneten optischen Komponente (1) umfaßt der Laserbearbeitungskopf ein erstes und ein zweites optisches System, die beide die optische Komponente (1) enthalten, ein bildgebendes Sensorsystem (8) und ein damit verbundenes Auswertesystem (9), wobei das erste optische System (1, 2, 3, 4) zur Fokussierung der Laserstrahlung auf einen Bestrahlungsort ausgebildet ist und das zweite optische System (1, 2, 3, 5, 6 , 7) zur Abbildung des Bestrahlungsorts (11) auf das bildgebende Sensorsystem (8) ausgebildet ist. Das Auswertesystem (9) enthält Mittel zur Berechnung von Kenngrößen aus der Helligkeitsverteilung und/oder der Helligkeit des Bildes von dem bildgebenden Sensorsystem zur Charakterisierung der optischen Komponente hinsichtlich Fehlstellen. Durch die Auswertung eines Bildes, auf dem sowohl die Emissionszone (11) als auch die optische Komponente (1) abgebildet ist, ist eine sehr zuverlässige Aussage über Fehlstellen auf der optischen Komponente (1) möglich.

## Beschreibung

Die Erfindung betrifft ein Verfahren zur Fehlstellenüberwachung von einer optischen Komponente, vorzugsweise eines Schutzglases, die in einem ersten optischen System und einem zweiten optischen System einer Laserbearbeitungsanlage, insbesondere eines Laserbearbeitungskopfes, angeordnet ist, wobei die Laserbearbeitungsanlage derart angeordnet wird, dass über das erste optische System ein Bestrahlungsort auf einem Objekt mit Laserstrahlung bestrahlbar ist, wobei eine Emissionszone am Bestrahlungsort auf dem Objekt erzeugt wird, und wobei über das zweite optische System ein Bild aufgenommen wird, welches aus einer Überlagerung einer Abbildung der Emissionszone und einer Abbildung der optischen Komponente und/oder einer Abbildung deren Fehlstellen gebildet wird,
ferner betrifft die Erfindung
eine Überwachungsvorrichtung mit einem bildgebenden Sensorsystem und mit einem Auswertesystem sowie deren Anwendung
und weiterhin
eine Laserbearbeitungsanlage zur Bestrahlung eines Werkstücks mit Laserstrahlung, insbesondere einen Laserbearbeitungskopf, mit Fehlstellenüberwachung von einer in der Laseranlage angeordneten Komponente mit einem ersten und einem zweiten optischen System, die beide die optische Komponente umfassen, mit einem bildgebenden Sensorsystem und einem damit verbundenen Auswertesystem, wobei das erste optische System zur Fokussierung der Laserstrahlung auf einen Bestrahlungsort ausgebildet ist und wobei das zweite optische System zur Abbildung des Bestrahlungsortes auf das bildgebende Sensorsystem ausgebildet ist.

Aus dem allgemeinen Fachwissen über die Systemtechnik von Lasermaterialbearbeitungsanlagen sind Laserbearbeitungsköpfe bekannt, die ein optisches System zur Strahlformung, insbesondere zur Fokussierung, der Laserstrahlung aufweisen. Eine aus der Strahlführung stammende Laserstrahlung wird also mittels dieses optischen Systems auf ein Werkstück fokussiert, so dass auf diesem Werkstück Laserbearbeitungsbedingungen für das jeweilige Laserverfahren vorliegen. Während der Durchführung des Laserverfahrens entsteht eine Emissionszone am Bearbeitungsort.
Ferner ist in diesen bekannten Laserbearbeitungsköpfen oftmals eine CCD-Kamera vorgesehen, die auf den geplanten Bearbeitungsort gerichtet ist, um eine Justage des Laserbearbeitungskopfs relativ zum Werkstück zu unterstützen. Das optische System der CCD-Kamera ist dabei derart ausgeführt, dass der Strahlverlauf zumindest teilweise koaxial mit dem Strahlverlauf der Laserstrahlung geführt wird, insbesondere wird die Fokussierlinse für die Laserstrahlung auch als ein Teil des optischen Systems der CCD-Kamera verwendet. Weiterhin ist in derartigen Bearbeitungsköpfen zwischen der Fokussierlinse für die Laserstrahlung und dem Bearbeitungsort ein Schutzglas vorgesehen. Dieses Schutzglas hat die Aufgabe die deutlich teurere Fokussierlinse vor von der Laserbearbeitung herrührenden Prozessemissionen, wie z. B. Spritzer, Rauch, etc., zu schützen. Nachteilig ist hierbei, dass mit zunehmender Verschmutzung des Schutzglases die Laserstrahlung das Schutzglas nicht mehr ungehindert transmittieren kann und für den Laserprozess entsprechend weniger Laserleistung zur Verfügung steht.

Zur Detektion von Verschmutzungen oder allgemein Fehlstellen auf dem Schutzglas sind in der Systemtechnik für die Lasermaterialbearbeitung bislang zwei Möglichkeiten bekannt:

Die eine Möglichkeit sieht vor, über berührende Temperatursensoren die Temperatur des Schutzglases zu messen. Es wird dabei davon ausgegangen, dass Fehlstellen auf dem Schutzglas zu einer Absorption von Laserleistung und damit zu einer Erwärmung des Schutzglases führen. Es hat sich aber herausgestellt, dass diese Vorrichtung und dieses Verfahren sehr unsensibel gegenüber kleinflächigen, lokalen Fehlstellen auf dem Schutzglas ist. Weiterhin kann diese Vorrichtung und dieses Verfahrens nur Fehlstellen detektieren, die zu einer Absorption von Laserleistung führen, nicht aber Fehlstellen, die eine Streuung von Laserstrahlung bewirken und somit ebenfalls den Laserprozess nachteilig beeinflussen.

Eine andere bekannte Möglichkeit sieht vor, optische Sensoren zu verwenden, die seitlich von den Schutzgläsern angebracht sind. Hierbei wird davon ausgegangen, dass während der Laserbearbeitung die Fehlstellen auf dem Schutzglas die Laserstrahlung derart stark absorbieren, so dass sie anfangen zu glühen. Die daraus resultierende optische Emission kann durch die optischen Detektoren gemessen werden. Nachteilig bei dieser Vorrichtung und bei diesem Verfahren ist es, dass großflächige Fehlstellen, die Laserstrahlung streuen, nicht detektiert werden können.

Die Aufgabe der Erfindung bestand darin, ein Verfahren zur Fehlstellenüberwachung, die Verwendung einer Überwachungsvorrichtung und eine Lasermaterialbearbeitungsanlage mit Fehlstellenüberwachung vorzuschlagen, die eine verbesserte Fehlstellenüberwachung von optischen Komponenten erlauben.

Die Lösung der Aufgabe erfolgt mit einem Verfahren mit den Merkmalen des Anspruchs 1, mit einer Überwachungsvorrichtung mit den Merkmalen des Anspruchs 16 und einer Laserbearbeitungsanlage mit Fehlstellenüberwachung mit den Merkmalen des Anspruchs 19.

Der Vorteil der Erfindung liegt u.a. darin, dass durch die Auswertung eines Bildes, auf dem sowohl die Emissionszone als auch die optische Komponente abgebildet ist, eine sehr zuverlässige Aussage über Fehlstellen auf der zu überwachenden optischen Komponente getätigt werden können.
Weiterhin weist die Erfindung den Vorteil auf, dass im Bereich der zu überwachenden Komponente keine Sensoren angebracht werden müssen. Außerdem verfügen - wie beim Stand der Technik bereits erläutert - manche Laserbearbeitungsköpfe oder auch Laserbearbeitungsanlagen bereits über Beobachtungskameras und ein bestehender Laserbearbeitungskopf oder eine bestehende Lasermaterialbearbeitungsanlage kann einfach und ohne erheblichen Aufwand nachgerüstet werden.

Die Erfindung schafft ein Verfahren zur Fehlstellenüberwachung von einer optischen Komponente, vorzugsweise eines Schutzglases, die in einem ersten optischen System und einem zweiten optischen System einer Laserbearbeitungsanlage, insbesondere eines Laserbearbeitungskopfes, angeordnet ist. Eine derartige Laserbearbeitungsanlage kann für die Laserverfahren Schweißen, Schneiden, Löten, Beschichten, Auftragsschweißen, Sintern, Abtragen oder Löten oder andere vorgesehen sein. Bei den Fehlstellen handelt es sich um lokale und/oder flächige, insbesondere großflächige, Fehlstellen.

Die Laserbearbeitungsanlage wird derart angeordnet, dass über das erste optische System ein Bestrahlungsort auf einem Objekt mit Laserstrahlung bestrahlbar ist. Die Laserbearbeitungsanlage wird also zunächst in eine Bearbeitungs-/Messposition relativ zu einem beliebigen Objekt, insbesondere zu dem zu bearbeitenden Werkstück, gebracht.

Anschließend wird eine Emissionszone am Bestrahlungsort auf dem Objekt erzeugt. Diese Emissionszone stellt eine Quelle optischer Emissionen dar und ist an der Position angeordnet, an der die Laserstrahlung zur Laserbearbeitung auf das Objekt treffen würde.

Dann wird über das zweite optische System ein Bild aufgenommen, welches aus einer Überlappung einer Abbildung der Emissionszone und einer Abbildung der optischen Komponente und/oder einer Abbildung deren Fehlstellen gebildet wird. Das zweite optische System bildet die Emissionszone auf den Detektor eines bildgebenden Sensorsystems ab. Auf diesem Detektor des bildgebenden Sensorsystems werden aber gleichzeitig die optische Komponente und/oder deren Fehlstellen abgebildet. Vorzugsweise ist dabei die Abbildung der Emissionszone scharf und die optische Komponente und/oder deren Fehlstellen unscharf abgebildet. Erfindungsgemäß werden dann aus der Helligkeitsverteilung und/oder der Helligkeit des aufgenommenen Bildes Kenngrößen zur Charakterisierung von Fehlstellen auf der optischen Komponente berechnet und anschließend bewertet. Die Kenngrößen weisen einen Zusammenhang mit dem Auftreten von Fehlstellen auf der optischen Komponente auf.
Die Bewertung der Kenngrößen kann über starre logische Verknüpfungen erfolgen, oder aber durch komplexere Bewertungsmethoden durchgeführt werden, wie z.B. fuzzy logic oder die Bewertung von zeitabhängigen Übertragungsfunktionen.

Es liegt eine bevorzugte Weiterbildung des Verfahrens vor, wenn die Fehlstellenüberwachung kontinuierlich oder quasi kontinuierlich mit Unterbrechungen durchgeführt wird. Bei der kontinuierlichen Fehlstellenüberwachung werden ständig, insbesondere im Videotakt, Bilder aufgenommen, Kenngrößen berechnet und diese Kenngrößen bewertet. Vorzugsweise wird die Fehlstellenüberwachung durch einen Triggerbefehl einer übergeordneten Steuerung, insbesondere der Lasersteuerung oder der Steuerung der Führungsmaschine, aktiv bzw. deaktiv gesetzt. Die Fehlstellenüberwachung arbeitet dann also in einem quasi kontinuierlichen Betrieb mit Unterbrechung. Als besonders vorteilhaft erweist es sich, wenn bei wiederholter Ausführung der gleichen Bearbeitungsaufgabe, also z.B. einer Schweißung oder eine Lötung in einer Serienfertigung, die Fehlstellenüberwachung jeweils während eines gleichen Teilabschnitts der Bearbeitungsaufgabe aktiviert ist. Bei diesem Teilabschnitt kann es sich um einen Messabschnitt vor der eigentlichen Bearbeitungsaufgabe und/oder einen Teilabschnitt innerhalb der eigentlichen Bearbeitungsaufgabe handeln. Handelt es sich um einen Teilabschnitt innerhalb der Bearbeitungsaufgabe, so wird vorzugsweise ein Teilabschnitt gewählt, in dem ein sehr gleichmäßiges Prozessverhalten bei der Laserbearbeitung erwartet wird.
Mit diesen bevorzugten Weiterbildungen des Verfahrens wird erreicht, dass statistische Messfehler durch die hohe Anzahl von ausgewerteten Bildern bzw. die Aktivierung der Fehlstellenüberwachung während eines gleichmäßigen quasi-kontinuierlichen Prozesses minimiert werden.

Bei einer bevorzugten Ausführung des Verfahrens wird das aufgenommene Bild derart digitalisiert, dass die Bildinformation als Matrix in Form von Pixeln mit zugeordneten Helligkeitswerten vorliegt. Auf Grundlage dieser digitalisierten Information können dann u.a. die nachfolgenden verschiedenen Kenngrößen errechnet werden:

Eine erste mögliche Kenngröße ist der durchschnittliche Helligkeitswert aller Pixel. Diese Kenngröße wird durch die Summation aller Helligkeitswerte und anschließender Division durch die Anzahl der Pixel berechnet.

Weitere Kenngrößen können abgeleitet werden, wenn zunächst die Verteilung "Anzahl der Pixel" pro "Helligkeitswert" - nachfolgend Verteilungsfunktion genannt - ermittelt wird.
Weitere mögliche Kenngröße sind der Schwerpunkt dieser Verteilungsfunktion oder der Helligkeitswert, für den gilt, daß in der Verteilungsfunktion jeweils unterhalb und oberhalb des Helligkeitswertes die gleiche Anzahl Pixel vorgesehen sind.

Zur Berechnung von weiteren Kenngrößen kann die Verteilungsfunktion in drei Bereiche eingeteilt werden:
Der erste Bereich mit den niedrigsten Helligkeitswerten entspricht bei Verwendung einer optischen Komponente ohne Fehlstellen im Bild dem zu der Abbildung der Emissionszone komplementären Bildbereich.
Ein zweiter Bereich mit hohen Helligkeitswerten entspricht dem Bildbereich mit der Abbildung der Emissionszone.
Ein dritter Bereich ist der Zwischenbereich zwischen dem ersten und dem zweiten Bereich. In diesem Zwischenbereich liegen im ungestörten Betrieb der Komponente, d.h. bei einer optischen Komponente ohne Fehlstellen, sehr wenige Pixel, da das Bild entweder die Emissionszone mit sehr hohen Helligkeitswerten oder den lichtschwachen Hintergrund zeigt.

Aus dem Kurvenverlauf der Verteilungsfunktion in diesen drei Bereichen können weitere Kenngrößen ermittelt werden.

Bei bevorzugten Weiterbildungen des Verfahrens werden Referenzen für eine oder mehrere Kenngrößen durch einen Bediener vorzugsweise manuell eingegeben. Bei anderen Ausführungen werden diese Referenzen durch automatische Kalibrierung, z. B. durch Referenzmessungen ermittelt. Bei besonders vorteilhaften Verfahren werden Werte für Kenngrößen verwendet, die bei früheren Fehlstellenüberwachungen berechnet wurden.

Das Verfahren ist vorteilhaft weitergebildet, wenn als Emissionszone die optische Prozessemission - also die Prozessstrahlung - während der Laserbearbeitung verwendet wird. Die Abnahme der Helligkeit der Abbildung der Emissionszone wird dann als ein Indikator für eine verringerte eingekoppelte Laserleistung in den Prozess und somit als ein Indikator für eine Streuung oder Absorption der Laserstrahlung an der optischen Komponente durch insbesondere großflächige Fehlstellen verwendet. Weiterhin werden durch den hochenergetischen Laserstrahl, der die zu überwachende optische Komponente transmittiert, lokale Fehlstellen, wie z.B. Spritzer, derart aufgeheizt, dass sie zu leuchten beginnen. Diese optische Emission erhöht die Helligkeitswerte des Bildbereichs, der komplementär zu dem Bereich mit der Abbildung der Emissionszone ist. Eine Erhöhung der Helligkeitswerte der Pixel in diesem Bereich kann somit als ein Indikator für lokale Fehlstellen auf der optischen Komponente verwendet werden.

Eine andere vorteilhafte Ausführung des Verfahrens liegt vor, wenn die Emissionszone durch einen Pilotlaserstrahl der Laserbearbeitungsanlage erzeugt wird. Die Helligkeitswerte der Pixel mit der Abbildung der Emissionszone sind bei großflächigen Fehlstellen der optischen Komponente ebenfalls verringert. Lokale Fehlstellen reflektieren den Pilotlaserstrahl in Richtung der Kamera und tragen ebenfalls zur Erhöhung der Helligkeitswerte der Pixel in dem zu der Abbildung der Emissionszone komplementären Bereich bei.

Die Aufgabe der Erfindung wird weiterhin durch die Anwendung einer Überwachungsvorrichtung nach dem Oberbegriff des Anspruchs 16 gelöst, die zur Durchführung des Verfahrens nach einem der Ansprüche 1 bis 15 verwendet wird, also entsprechend individualisiert ist.

Weiterhin wird die Aufgabe der Erfindung durch eine gattungsgemäße Laserbearbeitungsanlage mit Fehlstellenüberwachung mit den Merkmalen des Anspruchs 19 gelöst.

Die Laserbearbeitungsanlage ist bevorzugt weitergebildet, wenn die optische Komponente als ein Schutzglas und/oder eine Fokussiereinrichtung, insbesondere eine Fokussierlinse oder einen Fokussierspiegel, und/oder ein Strahlauskoppelelement ausgebildet ist. Die Erfindung bezieht sich also nicht nur auf ein Schutzglas, sondern es können auch andere optische Komponenten überwacht werden. Dies ist insbesondere vorteilhaft, wenn - wie im Fall des CO₂-Lasers - keine geeigneten Schutzgläser verfügbar sind und das letzte optische Element der Strahlformung der Gefahr der Verschmutzung ausgesetzt ist.

Bei bevorzugten Ausführungsformen der Laserbearbeitungsanlage ist zur Trennung der Strahlengänge der optischen Systeme ein Strahlteiler, insbesondere ein dichroitischer Strahlteiler, oder ein Ringspiegel vorgesehen. Diese optischen Elemente erlauben, die Strahlengänge im Bereich des zu überwachenden optischen Elements überlappend, insbesondere koaxial zueinander, anzuordnen.

Bei weiteren bevorzugten Ausführungsformen ist im zweiten optischen System ein wellenlängenselektives Element vorgesehen. Dieses wellenlängenselektive Element blockiert die Wellenlänge der Laserstrahlung und/oder transmittiert nur einen ausgewählten Wellenlängenbereich, insbesondere den sichtbaren Bereich ohne UV, die Wellenlänge eines Pilotlaserstrahls oder einer Referenzlichtquelle oder einen Wellenlängenbereich nahe an Infrarot.

Die Aufgabe der Erfindung wird auch durch ein Überwachungssystem mit den Merkmalen des Anspruchs 33 gelöst.

Weitere Merkmale, Vorteile und Einzelheiten der Erfindung ergeben sich aus den beigefügten Zeichnungen sowie der nachfolgenden Beschreibung einer bevorzugten Ausführungsform der Erfindung.

### Es zeigen:

- Figur 1: eine schematische Darstellung eines Laserbearbeitungskopfes mit Schutzglasüberwachung,
- Figur 2a,b: jeweils eine schematische Darstellung des Schutzglases in Figur 1 mit verschiedenen Fehlstellen in Draufsicht ,
- Figur 3 a, b c: jeweils links ein schematisiertes Bild wie es durch die CCD-Kamera in Figur 1 aufgenommen wird und jeweils rechts eine Darstellung der zu dem Bild gehörigen Verteilungsfunktion "Anzahl der Pixel" pro "Helligkeitswert".

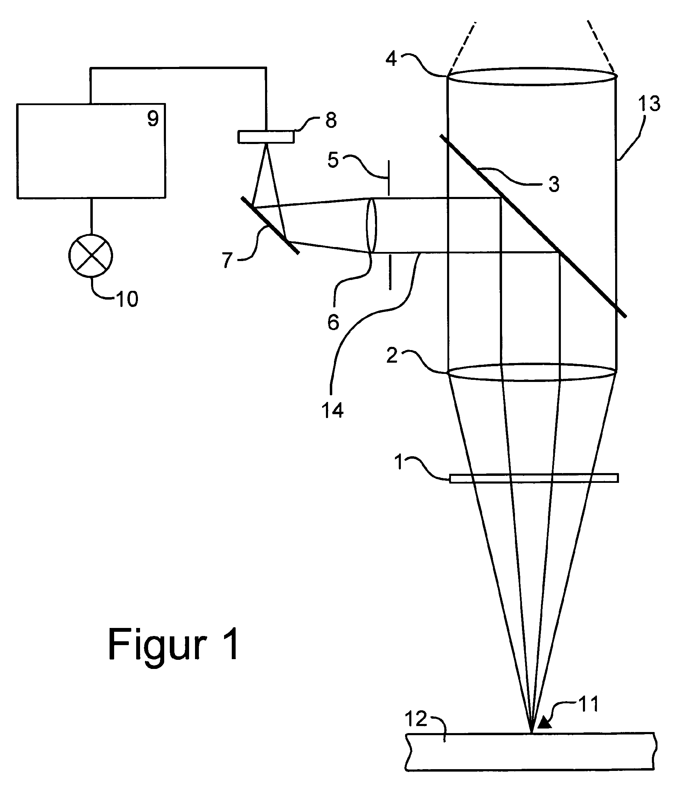

Die Figur 1 zeigt einen Laserbearbeitungskopf mit Schutzglasüberwachung, der in Bearbeitungsposition oberhalb eines Werkstücks 12 angeordnet ist, wobei die Laserstrahlung 13 auf der Oberfläche des Werkstücks 12 fokussiert ist. Weiterhin zeigt Figur 1 eine an den Laserbearbeitungskopf angeschlossene CCD-Kamera 8 mit einem Bildauswertesystem 9 und einer Signalleuchte 10.

Der Laserbearbeitungskopf weist eine Kollimierlinse 4 und eine dazu fluchtend angeordnete Fokussierlinse 2 auf, die unterhalb der Kollimierlinse 4 positioniert ist. Zwischen Kollimierlinse 4 und Fokussierlinse ist ein Strahlteiler 3 vorgesehen. Unterhalb der Fokussierlinse 2 und fluchtend zur Kollimierlinse 4 und der Fokussierlinse 2 ist ein Schutzglas 1 angeordnet. Kollimierlinse 4, Strahlteiler 3, Fokussierlinse 2 und Schutzglas 1 bilden ein optisches System zur Formung der Laserstrahlung 13.

Die Laserstrahlung 13 tritt von oben divergierend in den Laserbearbeitungskopf ein und trifft auf die Kollimierlinse 4. Nach der Kollimierlinse 4 ist die Laserstrahlung 13 als Parallelstrahlung ausgebildet und transmittiert den in einem 45°-Winkel zur Ausbreitungsrichtung der Laserstrahlung 13 angeordneten Strahlteiler 3. Im weiteren Strahlenverlauf wird sie durch die Fokussierlinse 2 fokussiert. Nach der Fokussierlinse 2 durchquert die Laserstrahlung 13 das Schutzglas 1, und trifft dann auf das Werkstück 12. Die Laserstrahlung 13 wird auf dem Werkstück 12 unter Ausbildung einer Wechselwirkungszone 11, z.B. einem Schweißbad, absorbiert.

In der Figur 1 ist weiterhin ein Abbildungsstrahlengang 14 eingezeichnet, über den die Wechselwirkungszone 11 auf den Detektor der CCD-Kamera 8 abgebildet wird. Dieser Abbildungsstrahlengang 14 beginnt bei der Wechselwirkungszone 11, führt dann durch das Schutzglas 1 und die Fokussierlinse 2. Im weiteren wird der Abbildungsstrahlengang 14 durch den Strahlteiler 3 senkrecht abgelenkt. Dieser Strahlteiler 3 weist die Eigenschaft auf, das Licht mit der Wellenlänge der Laserstrahlung ungehindert transmittieren zu lassen und Licht anderer Wellenlängen zu reflektieren. Der Abbildungsstrahlengang 14 durchquert dann im weiteren Verlauf nach dem Strahlteiler 3 eine optionale Blende 5, eine Abbildungslinse 6 und wird über einen Umlenkspiegel 7 auf den Detektor der CCD-Kamera 8 gerichtet.

Bei dem Abbildungsstrahlengang 14 ist die Oberfläche des Werkstücks 12 in der Gegenstandsebene, der Detektor der CCD-Kamera 8 in der Bildebene und die Fokussierlinse 2 im Bereich der gegenstandsseitigen Hauptebene angeordnet. Das Schutzglas 1 ist als Teil des Abbildungsstrahlengangs 14 zwischen Gegenstandsebene und gegenstandsseitiger Hauptebene angeordnet.

Die CCD-Kamera 8 ist über ein Kabel mit dem Bildauswertesystem 9 verbunden, in dem das aufgenommene Bild digitalisiert wird, Kenngrößen berechnet werden und eine Bewertung der Kenngrößen hinsichtlich Fehlstellen auf dem Schutzglas 1 durchgeführt wird. CCD-Kamera 8 und Bildauswertesystem bilden eine Überwachungsvorrichtung. Das Ergebnis der Bewertung ist eine i.O./n.i.O. (in Ordnung/nicht in Ordnung)-Entscheidung, wobei bei einer n.i.O.-Entscheidung die mit dem Auswertesystem 9 verbundene Signalleuchte 10 aktiviert wird. Anstelle der Aktivierung der Signalleuchte 10 kann auch ein Signal zur übergeordneten Steuerung der Laseranlage gesendet werden.

Bei der Bearbeitung des Werkstücks 12 mit der Laserstrahlung 13 kann das Schutzglas 1 durch verschiedene Mechanismen verschmutzt werden.

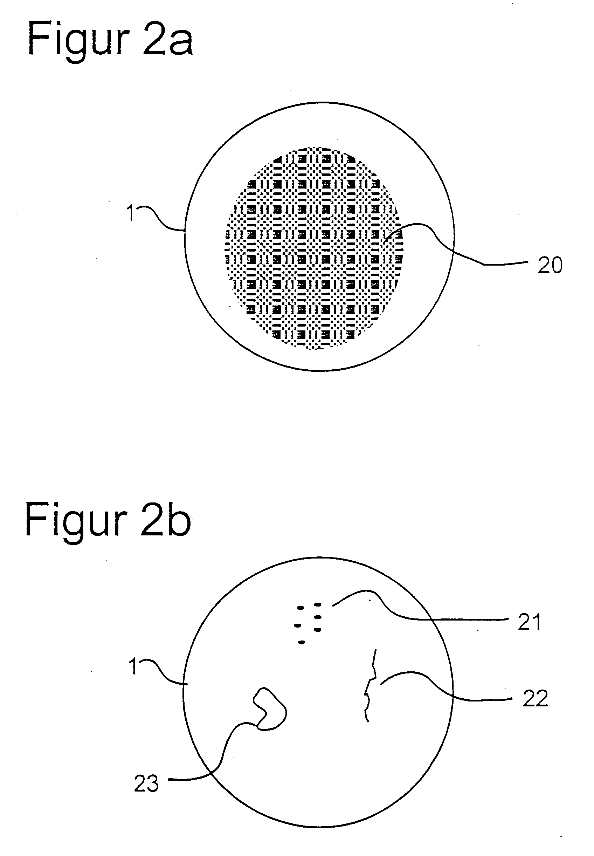

Figur 2a,b zeigen das Schutzglas 1 aus der Figur 1 in Draufsicht mit verschiedenen Fehlstellen.

In der Figur 2a ist als eine mögliche Verschmutzung eine Schmauchablagerung 20 gezeigt, die eine großflächige Fehlstelle bildet. Weist das Schutzglas 1 in der Figur 1 eine derartige Schmauchablagerung 20 auf, wird die Laserstrahlung 13 teilweise absorbiert oder gestreut. Für den eigentlichen Laserprozess auf dem Werkstück 12 steht dann nur eine in der Leistungsdichte verminderte Laserstrahlung 13 zur Verfügung.

In der Figur 2b sind Spritzer 21, lokale Aufschmelzungen 23 oder Risse 22 des Schutzglases 1 als Beispiele für lokale Fehlstellen gezeigt. Weist das Schutzglas 1 in Figur 1 derartige lokale Fehlstellen auf, so wird die Laserstrahlung 13 an diesen Fehlstellen lokal vollständig absorbiert. Die lokalen Fehlstellen erwärmen sich dann sehr stark und beginnen zu glühen. Für den eigentlichen Laserprozess auf dem Werkstück 12 steht nur eine leistungsverminderte Laserstrahlung 13 zur Verfügung. Weiterhin kann als Folge der Erwärmung und daraus resultierenden thermischen Spannungen das Schutzglas 1 zerspringen.

Sämtliche der in Figur 2 a und 2 b vorgestellten Fehlstellenarten können durch die in der Figur 1 gezeigten Schutzglasüberwachung erkannt werden:

Eine großflächige Fehlstelle, wie die Schmauchablagerung 20 in Figur 2 a, wird erkannt, indem eine Verringerung der Helligkeit der Abbildung der Wechselwirkungszone 11 detektiert wird. Einerseits wird nämlich - wie oben erläutert - die zu Verfügung stehende Laserstrahlung 13 abgeschwächt und andererseits die Helligkeit der Abbildung der Wechselwirkungszone 11 im Abbildungsstrahlengang 14 durch die erneute Durchquerung des verschmutzten Schutzglases 1 weiter verringert.

Lokale Fehlstellen, wie sie in Figur 2 b dargestellt sind, beginnen - wie oben erläutert - durch die Absorption der Laserstrahlung 13 zu glühen. Diese glühenden Bereiche werden über den Abbildungsstrahlengang 14 auf den Detektor der CCD - Kamera 8 abgebildet. Die Abbildung der glühenden Bereiche auf den Detektor der CCD-Kamera 8 ist allerdings nicht scharf, sondern eher wie ein unscharfer Schleier ausgebildet, da das Schutzglas 1 nicht in der Gegenstandsebene des Abbildungsstrahlengangs 14 sondern zwischen der Gegenstandsebene und der ersten Hauptebene angeordnet ist.

Lokale Fehlstellen werden durch die Schutzglasüberwachung erkannt, indem auf dem mit der CCD-Kamera 8 aufgenommenen Bild der beschriebene Schleierbereich detektiert wird.

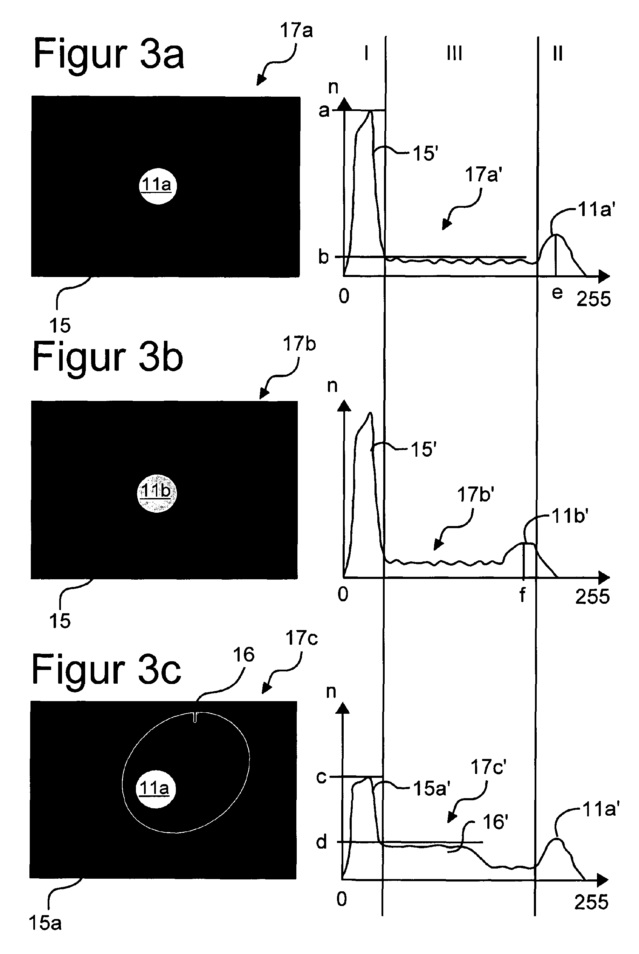

Figuren 3 a, b, c zeigen auf der linken Seite jeweils schematisiert ein Bild 17 a, b, c wie es von der CCD-Kamera 8 in Figur 1 während aktivierter Laserstrahlung 13 aufgenommen wird, wenn das Schutzglas 1 keine Fehlstellen (Figur 3a), flächige Fehlstellen (Figur 3b) und lokale Fehlstellen (Figur 3c) aufweist.

Die Bilder 17 a, b, c liegen in dem Bildauswertesystem 9 in Figur 1 in 8 Bit - Graustufendarstellung vor, d.h. jedem Bildpunkt - auch Pixel genannt - ist ein Helligkeitswert zwischen 0 und 255 zugeordnet. Dem Helligkeitswert 0 entspricht dabei die Farbe Schwarz, dem Wert 255 entspricht die Farbe Weiß und den dazwischenliegenden Werten sind Grautöne zugeordnet.

Jeweils rechts neben den Bildern 17 a, b, c sind deren jeweilige Verteilungsfunktionen 17 a', b', c' "Anzahl der Pixel" pro "Helligkeitswert" in kartesischer Koordinatendarstellung gezeigt. Auf der X-Achse sind Helligkeitswerte von Bildpixeln zwischen 0 und 255 und auf der Y-Achse die Anzahl der Pixel mit dem jeweiligen Helligkeitswert aufgetragen.

Das Bild 17 a in Figur 3a weist in der Mitte einen kreisrunden weißen Bildbereich 11a auf, der die Abbildung der Wechselwirkungszone 11 in Figur 1 zeigt. Der zu dem Bildbereich komplementäre Hintergrundbereich 15 ist weitgehend schwarz ausgebildet.

Rechts neben dem Bild 17a ist dessen Verteilungsfunktion 17 a' dargestellt. Der Kurvenverlauf der Verteilungsfunktion 17 a' weist drei Bereiche auf:

Der Bereich I ist bei den niedrigen Helligkeitswerte der Verteilungsfunktion 17 a' angeordnet. In diesem Bereich I befindet sich ein erstes lokales Maximum 15', das dem Hintergrundbereich 15 des Bildes 17 a entspricht.
Der Bereich III befindet sich bei den hohen Helligkeitswerte. Darin liegt ein weiteres lokales Maximum 11 a', das zu dem Bildbereich 11a des Bildes 17a korrespondiert.
Zwischen den Bereichen I und III ist ein Zwischenbereich II angeordnet, der durchgehend nur sehr niedrige Werte für die Größe "Anzahl der Pixel" aufweist. Die Höhe des ersten lokalen Maximums 15 ' im Bereich I ist mit a, die Höhe des weiteren lokalen Maximums 11 a' im Bereich III mit b bezeichnet. Der mittlere Helligkeitswert des lokalen Maximums 11 a' im Bereich III ist mit e benannt.

Die Änderungen des Bildes 17a für den Fall eines großflächig verschmutzen Schutzglases 1 in Figur 1 zeigt das Bild 17 b in Figur 3b. Der Hintergrundbereich 15 in Bild 17b ist unverändert weitgehend schwarz. Der Bildbereich 11 b, der wieder die Abbildung der Wechselwirkungszone 11 in Figur 1 darstellt, ist in der Helligkeit gegenüber dem Bildbereich 11a in Figur 3a deutlich verringert.
Die rechts neben dem Bild 17b angeordnete Verteilungsfunktion 17b' zeigt, dass die Verteilungsfunktion 17 b' im Bereich I gegenüber der Verteilungsfunktion 17 a' in Figur 3a unverändert ist. Das zum lokalen Maximum 11a' in Figur 3a korrespondierende lokale Maximum 11 b' in Figur 3b ist aber im Vergleich zu diesem in Richtung geringerer Helligkeitswerte verschoben. Der mittlere Helligkeitswert des lokalen Maximums 11b'in Figur 3b ist f, wobei f < e ist.

Durch die Verschiebung des lokalen Maximums 11a' nach 11b' ist eine großflächige Verschmutzung zu detektieren.

In der Figur 3 c links ist schematisiert das von der CCD-Kamera 8 aufgenommene Bild 17 c für den Fall gezeigt, dass das Schutzglas 1 lokale Fehlstellen, wie z.B. Spritzer 21, Risse 22 und Aufschmelzung 23 in Figur 2 b, aufweist. Das Bild 17 c zeigt gegenüber Bild 17a einen nahezu unveränderten Bildbereich 11a. Zusätzlich ist aber ein Schleierbereich 16 erkennbar, der einer unscharfen Abbildung der durch die Laserstrahlung 13 aufgeheizten und somit optisch emittierenden lokalen Fehlstellen entspricht. Der Schleierbereich 16 ist oval ausgebildet und überlappt den Bildbereich 11a und teilweise den Hintergrundbereich 15 a.
Bei der zugehörigen Verteilungsfunktion 17 c' ist die Höhe des ersten Maximums 15a' im Gegensatz zum ersten Maximum 15' in Figur 3a auf einen Wert c verringert, so dass c < a ist. In dem Zwischenbereich II ist der Kurvenverlauf im Bereich 16', der dem Schleierbereich 16 entspricht, deutlich höher als bei der Verteilungsfunktion 17 a' in der Figur 3 a.

Eine Veränderung des ersten Maximums 15' und eine Erhöhung der Anzahl der Pixel im Bereich II kann also eine Verschmutzung des Schutzglases mit lokalen Fehlstellen interpretiert werden.

Nachfolgend ist eine nicht-abschließende Liste von Bewertungsrelationen zur Bewertung des Auftretens von Fehlstellen auf dem Schutzglas angeführt:
1. durchschnittlicher Helligkeitswert aller Pixel größer als Referenz - wird bewertet als - lokale Fehlstellen auf der optischen Komponente
2. durchschnittliche Helligkeitswert aller Pixel kleiner als Referenz - wird bewertet als - flächige Fehlstellen auf der optischen Komponente
3. Schwerpunkt der Verteilungsfunktion größer als Referenz - wird bewertet als - lokale Fehlstellen auf der optischen Komponente
4. Schwerpunkt der Verteilungsfunktion kleiner als Referenz - wird bewertet als - flächige Fehlstellen auf der optischen Komponente
5. Höhe des ersten Maximums kleiner als Referenz - wird bewertet als - lokale Fehlstellen auf der optischen Komponente
6. Höhe des zweiten Maximums kleiner als Referenz - wird bewertet als - flächige Fehlstellen auf der optischen Komponente
7. mittlerer Helligkeitswert des zweiten Maximums kleiner als Referenz - wird bewertet als - flächige Fehlstellen auf der optischen Komponente
8. Fläche des Zwischenbereichs größer als Referenz - wird bewertet als - lokale Fehlstellen auf der optischen Komponente.

Die Schutzglasüberwachung wird nun durchgeführt, indem zunächst der Bearbeitungskopf relativ zum Werkstück 12 in seiner Bearbeitungsposition positioniert wird und die Bearbeitung begonnen wird. Durch ein Triggersignal wird die Schutzglasüberwachung aktiviert. Während der Schutzglasüberwachung werden kontinuierlich Bilder von der CCD-Kamera 8 aufgenommen und an das Bildauswertesystem 9 weitergeleitet. Ebenfalls kontinuierlich und parallel zur Aufnahme der Bilder werden die Kenngrößen berechnet und mittels einer oder mehrere der in der Liste gezeigten Relationen bewertet. Die einzelnen Ergebnisse werden über Bewertungsfunktion, Fuzzy Logic o.ä. zu einem Ergebnis zusammengefasst. Führt die Bewertung zu dem Ergebnis, dass das Schutzglas Fehlstellen aufweist, so wird ein Signal an die Signalleuchte 10 ausgegeben.

## Patentansprüche

1. Verfahren zur Fehlstellenüberwachung von einer optischen Komponente, vorzugsweise eines Schutzglases, die in einem ersten optischen System und einem zweiten optischen System einer Laserbearbeitungsanlage, insbesondere eines Laserbearbeitungskopfs, angeordnet ist,
wobei vorgesehen ist,
dass die Laserbearbeitungsanlage derart angeordnet wird, dass über das erste optische System ein Bestrahlungsort auf einem Objekt mit Laserstrahlung bestrahlbar ist,
dass eine Emissionszone am Bestrahlungsort auf dem Objekt erzeugt wird,
und dass über das zweite optische System ein Bild aufgenommen wird, welches aus einer Überlagerung einer Abbildung der Emissionszone und einer Abbildung der optischen Komponente und/oder einer Abbildung deren Fehlstellen gebildet wird,
**dadurch gekennzeichnet,**
**dass** aus der Helligkeitsverteilung und/oder der Helligkeit des aufgenommenen Bildes Kenngrößen zur Charakterisierung von Fehlstellen auf der optischen Komponente berechnet werden
und
**dass** die Kenngrößen bewertet werden.

2. Verfahren nach Anspruch 1,
**dadurch gekennzeichnet,**
**dass** die Fehlstellenüberwachung kontinuierlich oder quasi-kontinuierlich mit Unterbrechungen durchgeführt wird.

3. Verfahren nach einem der Ansprüche 1 oder 2,
**dadurch gekennzeichnet,**
**dass** die Fehlstellenüberwachung durch einen Triggerbefehl einer übergeordneten Steuerung aktiviert und/oder deaktiviert wird.

4. Verfahren nach einem der vorhergehenden Ansprüche,
**dadurch gekennzeichnet,**
**dass** bei wiederholter Ausführung der gleichen Bearbeitungsaufgabe die Fehlstellenüberwachung jeweils während eines gleichen Teilabschnitts der Bearbeitungsaufgabe aktiviert ist.

5. Verfahren nach einem der vorhergehenden Ansprüche,
**dadurch gekennzeichnet,**
**dass** das aufgenommene Bild digitalisiert wird und die Bildinformation dann als Matrix in Form von Pixeln mit zugeordneten Helligkeitswerten vorliegt.

6. Verfahren nach Anspruch 5,
**dadurch gekennzeichnet,**
**dass** der durchschnittliche Helligkeitswert aller Pixel als eine erste Kenngröße verwendet wird.

7. Verfahren nach Anspruch 5 oder 6,
**dadurch gekennzeichnet,**
**dass** die Verteilung "Anzahl der Pixel" pro "Helligkeitswert" - nachfolgend Verteilungsfunktion genannt - ermittelt wird.

8. Verfahren nach Anspruch 7,
**dadurch gekennzeichnet,**
**dass** der Schwerpunkt der Verteilungsfunktion als eine zweite Kenngröße der Fehlstellenüberwachung verwendet wird.

9. Verfahren nach Anspruch 7 oder 8,
**dadurch gekennzeichnet,**
**dass** innerhalb der Verteilungsfunktion ein dem Hintergrund des Bildes entsprechendes erstes lokales Maximum ermittelt wird und die Charakteristika des ersten lokalen Maximums, insbesondere der mittlere Helligkeitswert, die Höhe oder die Breite, als weitere Kenngrößen verwendet werden.

10. Verfahren nach einem der Ansprüche 7 bis 9,
**dadurch gekennzeichnet,**
**dass** innerhalb der Verteilungsfunktion ein der Abbildung der Emissionszone entsprechendes zweites lokales Maximum ermittelt wird und die Charakteristika des zweiten lokalen Maximums, insbesondere der mittlere Helligkeitswert, die Höhe, die Breite oder die Fläche, als weitere Kenngrößen verwendet werden.

11. Verfahren nach einem der Ansprüche 7 bis 10,
**dadurch gekennzeichnet,**
**dass** ein Zwischenbereich zwischen erstem und zweitem Maximum ermittelt wird und die Charakteristika des Zwischenbereichs, insbesondere die Fläche oder mittlere Höhe, als weitere Kenngrößen verwendet werden.

12. Verfahren nach einem der vorhergehenden Ansprüche,
**dadurch gekennzeichnet,**
**dass** Referenzen für eine oder mehrere Kenngrößen manuell eingegeben werden und/oder durch automatische Kalibrierung ermittelt werden, insbesondere durch Mittelwertbildung von Werten für Kenngrößen, die bei früheren Fehlstellenüberwachungen berechnet wurden.

13. Verfahren nach einem der vorhergehenden Ansprüche,
**dadurch gekennzeichnet,**
**dass** eine Bewertung der optischen Komponente auf Fehlstellen durch die folgenden Relationen einzeln oder in Kombination durchgeführt wird:
durchschnittlicher Helligkeitswert aller Pixel größer als Referenz
- wird bewertet als -
lokale Fehlstellen auf der optischen Komponente
und/oder
durchschnittliche Helligkeitswert aller Pixel kleiner als Referenz
- wird bewertet als -
flächige Fehlstellen auf der optischen Komponente
und/oder
Schwerpunkt der Verteilungsfunktion größer als Referenz
- wird bewertet als -
lokale Fehlstellen auf der optischen Komponente
und/oder
Schwerpunkt der Verteilungsfunktion kleiner als Referenz
- wird bewertet als -
flächige Fehlstellen auf der optischen Komponente
und/oder
Höhe des ersten Maximums kleiner als Referenz
- wird bewertet als -
lokale Fehlstellen auf der optischen Komponente
und/oder
Höhe des zweiten Maximums kleiner als Referenz
- wird bewertet als -
flächige Fehlstellen auf der optischen Komponente
und/oder
mittlerer Helligkeitswert des zweiten Maximums kleiner als Referenz
- wird bewertet als -
flächige Fehlstellen auf der optischen Komponente
und/oder
Fläche des Zwischenbereichs größer als Referenz
- wird bewertet als -
lokale Fehlstellen auf der optischen Komponente.

14. Verfahren nach einem der vorhergehenden Ansprüche,
**dadurch gekennzeichnet,**
**dass** ein i.O./n.i.O. Signal ausgegeben wird.

15. Verfahren nach einem der vorhergehenden Ansprüche,
**dadurch gekennzeichnet,**
**dass** die Emissionszone durch die optische Emission während der Laserbearbeitung und/oder durch einen Pilotlaserstrahl der Laserbearbeitungsanlage und/oder durch eine Referenzlichtquelle erzeugt wird.

16. Anwendung einer Überwachungsvorrichtung
mit einem bildgebenden Sensorsystem (8) und
mit einem Auswertesystem (9), das mit dem bildgebenden Sensorsystem (8) verbunden ist
**dadurch gekennzeichnet,**
**dass** die Überwachungsvorrichtung zur Durchführung des Verfahrens nach einem der Ansprüche 1 bis 15 verwendet wird.

17. Anwendung einer Überwachungsvorrichtung nach Anspruch 16,
**dadurch gekennzeichnet,**
**dass** das bildgebende Sensorsystem (8) eine Diodenzeile oder einen CCD-Chip oder einen CMOS-Chip umfasst.

18. Anwendung einer Überwachungsvorrichtung nach Anspruch 16 oder 17,
**dadurch gekennzeichnet,**
**dass** das Auswertesystem (9) eine Bilderfassungseinheit und einen Personal Computer oder einen Microcontroller umfasst.

19. Laserbearbeitungsanlage zur Bestrahlung eines Werkstücks mit Laserstrahlung (13), insbesondere Laserbearbeitungskopf, mit Fehlstellenüberwachung von einer in der Laserbearbeitungsanlage angeordneten optischen Komponente (1)
mit einem ersten und einem zweiten optischen System, die beide die optische Komponente (1) umfassen,
mit einem bildgebenden Sensorsystem (8) und einem damit verbundenen Auswertesystem (9),
wobei das erste optische System (1,2,3,4) zur Fokussierung der Laserstrahlung auf einen Bestrahlungsort ausgebildet ist
und wobei das zweite optische System (1,2,3,5,6,7) zur Abbildung des Bestrahlungsorts (11) auf das bildgebende Sensorsystem (8) ausgebildet ist,
**dadurch gekennzeichnet,**
**dass** das Auswertesystem (9) Mittel zur Berechnung von Kenngrößen aus der Helligkeitsverteilung und/oder der Helligkeit des Bildes von dem bildgebenden Sensorsystem zur Charakterisierung der optischen Komponente hinsichtlich Fehlstellen aufweist
und
**dass** das Auswertesystem (9) Mittel zur Bewertung der Kenngrößen aufweist.

20. Laserbearbeitungsanlage nach Anspruch 19,
**dadurch gekennzeichnet,**
**dass** die optische Komponente (1) als ein Schutzglas (1) und/oder eine Fokussiereinrichtung, insbesondere eine Fokussierlinse oder ein Fokussierspiegel, und/oder ein Strahlauskoppelelement ausgebildet ist.

21. Laserbearbeitungsanlage nach Anspruch 19 oder 20,
**dadurch gekennzeichnet,**
**dass** zur Trennung der Strahlengänge der optischen Systeme ein Strahlteiler (3), insbesondere ein dichroitischen Strahlteiler, oder ein Ringspiegel vorgesehen ist.

22. Laserbearbeitungsanlage nach einem der Ansprüche 19 bis 21,
**dadurch gekennzeichnet,**
**dass** in dem zweiten optischen System (1,2,3,5,6,7) ein wellenlängenselektives Element vorgesehen ist.

23. Laserbearbeitungsanlage nach einem der Ansprüche 19 bis 22,
**dadurch gekennzeichnet,**
**dass** im zweiten optischen System (1,2,3,5,6,7) das bildgebende Sensorsystem (8) in der Bildebene und der Bestrahlungsort im Bereich der Gegenstandsebene angeordnet ist und/oder die optische Komponente (1) zwischen Gegenstandsebene und der vorderen Hauptebene angeordnet ist.

24. Laserbearbeitungsanlage nach einem der Ansprüche 19 bis 23,
**dadurch gekennzeichnet,**
**dass** das bildgebende Sensorsystem (8) eine Diodenzeile oder einen CCD-Chip oder einen CMOS-Chip umfasst.

25. Laserbearbeitungsanlage nach einem der Ansprüche 19 bis 24,
**dadurch gekennzeichnet,**
**dass** das bildgebende Sensorsystem (8) und/oder das Auswertesystem (9) Mittel zur Digitalisierung des Bildes aufweist.

26. Laserbearbeitungsanlage nach einem der Ansprüche 19 bis 25,
**dadurch gekennzeichnet,**
**dass** das Auswertesystem (9) Mittel zur Berechnung einer Verteilungsfunktion des Bildes aufweist.

27. Laserbearbeitungsanlage nach einem der Ansprüche 19 bis 26,
**dadurch gekennzeichnet,**
**dass** das Auswertesystem (9) Mittel zur Berechnung von Kenngrößen und/oder Mittel zur Bewertung der Kenngrößen aufweist, wobei die Kenngrößen lokale und/oder flächige Fehlstellen charakterisieren.

28. Laserbearbeitungsanlagen nach einem der Ansprüche 19 bis 27,
**dadurch gekennzeichnet,**
**dass** das Auswertesystem (9) Mittel zur Berechnung von Kenngrößen und/oder Mittel zur Bewertung der Kenngrößen aufweist, wobei die Kenngröße aus
dem Schwerpunkt der Verteilungsfunktion
und/oder
aus Charakteristika des ersten und/oder des zweiten lokalen Maximums und/oder des Zwischenbereichs der Verteilungsfunktion
gebildet werden.

29. Laserbearbeitungsanlage nach einem der Ansprüche 19 bis 28,
**dadurch gekennzeichnet,**
**dass** das Auswertesystem (9) eine Speichereinrichtung und/oder eine
Einstelleinrichtung für Referenzen der Kenngrößen aufweist.

30. Laserbearbeitungsanlage nach einem der Ansprüche 19 bis 29,
**dadurch gekennzeichnet,**
**dass** die Mittel zur Bewertung Relationen und/oder Fuzzy Logic und/oder Übertragungsfunktionen aufweisen.

31. Laserbearbeitungsanlage nach einem der Ansprüche 19 bis 30,
**dadurch gekennzeichnet,**
**dass** ein Signalausgang für ein i.O./n.i.O. - Signal vorgesehen ist.

32. Laserbearbeitungsanlage nach einem der Ansprüche 19 bis 31,
**dadurch gekennzeichnet,**
**dass** die Laserbearbeitungsanlage zur Anwendung des Verfahrens nach einem der Ansprüche 1 bis 18 verwendet wird.

33. Überwachungsvorrichtung, vorzugsweise zur Anwendung mit dem Verfahren nach einem oder mehreren der Ansprüche 1 bis 15, insbesondere zur Verwendung in der Lasermaterialbearbeitungsanlage nach einem oder mehreren der Ansprüche 19 bis 23,
mit einem bildgebenden Sensorsystem (8) und
mit einem Auswertesystem (9), das mit dem bildgebenden Sensorsystem (8) verbunden ist
**dadurch gekennzeichnet,**
**dass** mit dem bildgebenden Sensorsystem (8) ein Bild aufnehmbar ist, welches aus einer Überlagerung einer Abbildung einer Emissionszone und einer Abbildung einer optischen Komponente und/oder einer Abbildung deren Fehlstellen gebildet ist,
**dass** das Auswertesystem (9) Mittel zur Berechnung von Kenngrößen aus der Helligkeitsverteilung und/oder der Helligkeit des Bildes von dem bildgebenden Sensorsystem zur Charakterisierung der optischen Komponente hinsichtlich Fehlstellen aufweist und
**dass** das Auswertesystem (9) Mittel zur Bewertung der Kenngrößen aufweist.

34. Überwachungsvorrichtung nach Anspruch 33,
**dadurch gekennzeichnet,**
**dass** die Überwachungsvorrichtung die kennzeichnenden Merkmale von einem oder mehreren der Ansprüche 24 bis 31 aufweist.
